# EUROPÄISCHE PATENTSCHRIFT

(11) **EP 3 134 634 B1**
(45) Veröffentlichungstag und Bekanntmachung des Hinweises auf die Patenterteilung: **08.06.2022**
(21) Anmeldenummer: 15705311.7
(22) Anmeldetag: 19.02.2015
(51) Int. Cl.: F02M 26/00, F02M 26/54, F02M 26/70, F02M 26/73, F02M 26/74, F02D 9/04, F16K 49/00

(54) **ABGASKLAPPENVORRICHTUNG FÜR EINE VERBRENNUNGSKRAFTMASCHINE**
EXHAUST GAS VALVE FOR COMBUSTION ENGINE
VALVE D'ECHAPPEMENT POR UN MOTEUR A COMBUSTION

(30) Priorität: 01.04.2014 DE 102014104577
(43) Veröffentlichungstag der Anmeldung: 01.03.2017
(73) Patentinhaber: Pierburg GmbH, 41460 Neuss (DE)
(72) Erfinder: GERARDS, Hans, 52538 Gangelt (DE); GRAUTEN, Andreas, 47802 Krefeld (DE); MICHELS, Jürgen, 41238 Mönchengladbach (DE); HOLLER, Tim, 47918 Tönisvorst (DE); KLASS, Kirill, 45239 Essen (DE)
(74) Vertreter: terpatent Patentanwälte ter Smitten Eberlein-Van Hoof Rütten Daubert
(86) Internationale Anmeldenummer: PCT/EP2015/053474
(87) Internationale Veröffentlichungsnummer: WO 2015/149990

(56) Entgegenhaltungen:
- EP-A1- 1 911 958
- EP-A2- 0 972 918
- EP-A2- 1 291 509
- DE-A1-102008 001 834
- JP-A- H07 238 871
- JP-A- H11 257 104
- US-A1- 2007 240 676
- US-A1- 2012 313 025

## Beschreibung

Die Erfindung betrifft eine Abgasklappenvorrichtung für eine Verbrennungskraftmaschine mit einem Strömungsgehäuse, das einen Abgaskanal begrenzt, einem Klappenkörper, der drehbar im Abgaskanal angeordnet ist, einer Welle, auf der der Klappenkörper befestigt ist, einem elektrischen Aktor, der einen Elektromotor und ein Getriebe aufweist, über welche die Welle und der Klappenkörper im Abgaskanal drehbar sind und einem separaten Aktorgehäuse, in dem der Aktor angeordnet ist, wobei die Welle in das Aktorgehäuse ragt.

Derartige Abgasklappenvorrichtungen werden entweder als Abgasstauklappen oder Abgasrückführventile in Niederdruck- oder Hochdruckabgaskreisläufen von Verbrennungsmotoren eingesetzt und dienen zur Regelung einer zu den Zylindern zurückzuführenden Abgasmenge oder zur Regelung des Drucks im Abgasrückführkanal zur Verringerung des Schadstoffemissionen des Motors.

Je nach Einbauort sind diese Ventile sowohl bezüglich der anfallenden Schadstoffmenge als auch bezüglich der herrschenden Temperaturen unterschiedlich stark belastet. Insbesondere bei Ventilen, welche im Heißgasbereich angeordnet sind, also im Abgasauslassbereich oder im Hochdruckabgasrückführkanal vor einem eventuell vorhandenem Abgaskühler ist eine so hohe thermische Belastung zu erwarten, dass bei der Verwendung von Elektromotoren als Antrieb der Klappen, dieser vor Überhitzung geschützt werden muss.

Dies erfolgt entweder dadurch, dass der Aktor in größerer Entfernung zum Abgaskanal angeordnet wird und dann über ein Gestänge betätigt wird oder zumindest dadurch, dass die Klappenwelle von der Ausgangswelle des Aktors getrennt wird und lediglich eine Kopplung der beiden Wellen durch schlecht leitende Kupplungselemente hergestellt wird.

Als weitere Maßnahme zum Schutz vor thermischer Überlastung eines Elektromotors eines Aktors ist es aus der DE 10 2011 000 101 A1 bekannt, ein Aktorgehäuse aus mindestens zwei Gehäuseteilen mit unterschiedlicher Wärmeleitfähigkeit herzustellen. Dabei soll das schlecht die Wärme leitende Gehäuseteil dem Abgaskanal zugewandt sein und das gut die Wärme leitende Gehäuseteil vom Abgaskanal abgewandt angeordnet sein und Rippen aufweisen, über die eine möglichst große Wärmemenge an die Umgebung abgegeben werden kann. Bei dieser Anordnung ist jedoch weiter der Elektromotor in unmittelbarer Nähe zum Abgaskanal angeordnet, so dass bei lang andauernder Verwendung bei hohen Temperaturen weiterhin eine thermische Überlastung des Elektromotors zu befürchten ist.

Des Weiteren ist aus der EP 2 597 294 A2 ein Abgasrückführventil bekannt, welches im Niederdruckabgasrückführbereich, also bei geringeren auftretenden Temperaturen verwendet wird. Bei diesem Ventil ist der Klappenkörper direkt auf der Ausgangswelle des Elektromotors angeordnet. So entsteht ein hoher Wärmeeintrag in den Elektromotor, so dass Schäden durch Überhitzung sehr wahrscheinlich sind.

Zusätzlich ist aus der EP 1 911 958 A1 ein Abgasrückführventil bekannt, welches in einem Gehäuse gelagert ist, welches einerseits eine Öffnung zur Aufnahme eines einen Abgaskanal begrenzenden rohrförmigen Bauteils aufweist und andererseits als Aufnahme für einen Elektromotor eines Aktors dient, der zusätzlich ein Getriebe aufweist, welches eine Welle antriebt, auf der ein Klappenkörper des Abgasrückführventils angeordnet ist. Um eine thermische Überlastung des Aktors zu vermeiden sind im Gehäuse Kühlmittelkanäle ausgebildet.

Des Weiteren offenbart die US 2012/0313025 A1 eine Abgasklappe, die über einen elektrischen Aktor bewegt wird, wobei die Klappenwelle in das Aktorgehäuse ragt und auf der Klappenwelle ein Zahnrad eines Getriebes angeordnet ist. Das Strömungsgehäuse ist beabstandet zum Aktorgehäuse angeordnet.

Auch ist aus der JP 11257104 A eine Abgasklappe bekannt, deren Aktor entfernt zur Klappe angeordnet ist, die auf einer Welle aus austenitischem Stahl hergestellt ist und in Lagern aus einem martensitischem Stahl gelagert ist.

Entsprechend bestehen bei den bekannten Ausführungen die Nachteile, dass kein ausreichender Schutz vor einer thermischen Überlastung vorhanden ist, wenn der Aktor in der Nähe des Abgaskanals angeordnet ist und die Welle, auf der der Klappenkörper angeordnet ist, in das Aktorgehäuse ragt.

Es stellt sich daher die Aufgabe, eine Klappenvorrichtung für eine Verbrennungskraftmaschine zur Verfügung zu stellen, welche trotz einfachen Aufbaus mit einer in das Aktorgehäuse ragender einstückiger Klappenwelle hoch thermisch belastbar ist, so dass eine Überhitzung eines Elektromotors auch in thermisch hoch belasteten Bereichen zuverlässig vermieden wird.

Diese Aufgabe wird durch eine Abgasklappenvorrichtung mit den Merkmalen des Hauptanspruchs 1 gelöst.

Dadurch, dass auf der Welle, auf der der Klappenkörper angeordnet ist, ein Abtriebszahnrad des Getriebes befestigt ist und die Welle eine Wärmeleitfähigkeit von λ<17W/mK aufweist und in einem Lager angeordnet ist, welches eine Wärmeleitfähigkeit von λ>17W/mK aufweist und in einer Lageraufnahme des Strömungsgehäuses angeordnet ist, wobei der Innenumfang der Lageraufnahme dem Außenumfang des Lagers entspricht und die Lageraufnahme des Strömungsgehäuses in eine Aufnahmeöffnung des Aktorgehäuses ragt und radial gegen die Aufnahmeöffnung radial begrenzende Wände anliegt, wird einerseits der Wärmeeintrag in das Aktorgehäuse über die Welle reduziert und andererseits eine erhöhte Wärmeabfuhr über das Lager und die Lageraufnahme des Strömungsgehäuses aufgrund der großen Kontaktoberfläche zwischen dem Lager und der Lageraufnahme des Strömungsgehäuses erreicht, so dass das erste Lager als Wärmesenke wirkt. Dennoch wird eine direkte Anbindung der Klappenwelle an den Aktor hergestellt ohne zwischengeschaltete Koppelelemente verwenden zu müssen. Des Weiteren wird eine wärmeleitende Anbindung von dem Bereich der Lageraufnahme des Strömungsgehäuses zum Wärme ableitenden Aktorgehäuse hergestellt.

Vorzugsweise weist das Aktorgehäuse eine Wärmeleitfähigkeit von λ>150W/mK auf. Hierdurch wird sichergestellt, dass eine große Wärmemenge über die große Oberfläche des Aktorgehäuses an die Umgebung abgeführt werden kann.

Das Aktorgehäuse kann vorteilhafterweise aus einer Aluminiumlegierung hergestellt sein, mit der eine ausreichende Wärmeleitung sichergestellt wird.

Des Weiteren wird die Welle vorzugsweise aus einem austenitischen Stahl hergestellt, der einerseits kostengünstig herstellbar ist und andererseits eine geringe Wärmeleitung über die Welle in das Aktorgehäuse zulässt.

In einer bevorzugten Ausführung ist das erste Lager ein Kohlegraphitlager. Dieses weist einerseits sehr gute Gleiteigenschaften auch bei hohen Temperaturen auf und führt andererseits bei einer Wärmeleitfähigkeit von etwa 65W/mK zu einer hohen Wärmeableitung von der Welle in Richtung des umgebenden Gehäuses, so dass eine beträchtliche Wärmemenge vor Erreichen des Aktorgehäuses abgeführt werden kann.

In der Aufnahmeöffnung des Aktorgehäuses ist ein zweites Lager mit einer Wärmeleitfähigkeit von λ>17W/mK angeordnet, in dem die Welle gelagert ist, wobei der Außenumfang des zweiten Lagers am Aktorgehäuse anliegt. Auf diese Weise wird die über die Welle weitergeleitete Wärme am zweiten ebenfalls als Wärmesenke wirkenden zweiten Lagers in Richtung des Aktorgehäuses und somit in Richtung der Umgebung geleitet.

Um zusätzlich zu verhindern, dass zwischen Welle und Lager heißes Abgas in das Innere des Aktorgehäuses geleitet wird, ist in der Aufnahmeöffnung axial an der vom Klappenkörper weg weisenden Seite des zweiten Lagers ein Dichtring angeordnet, der die Welle umgibt.

In einer vorteilhaften alternativen Ausgestaltung der Erfindung ist in der Aufnahmeöffnung des Aktorgehäuses eine Lagerbuchse als Axiallager mit einer Wärmeleitfähigkeit von λ>17W/mK angeordnet, welches die Welle umgibt, wobei der Außenumfang der Lagerbuchse am Aktorgehäuse anliegt, wodurch wiederum ein wärmeleitender Kontakt zum Aktorgehäuse hergestellt wird, der dazu führt, dass Wärme aus der Welle und vom an der Welle entlang strömendem Abgas an die Umgebung abgeführt werden kann. Des Weiteren bewirkt die Lagerbuchse eine Vorabdichtung zur Minimierung des Gasflusses in Richtung des zweiten Radiallagers.

Bei einer derartigen Ausführung kann in der Aufnahmeöffnung ein als Nadellager mit Radialdichtringen ausgeführtes Radiallager angeordnet ist, welches die Welle umschließt, wobei die Lagerbuchse axial zwischen dem Klappenkörper und dem Nadellager angeordnet ist. Das Nadellager führt einerseits aufgrund der integrierten Dichtringe zu einer guten Wellenabdichtung und andererseits zu einer sehr guten radialen Lagerung mit hoher Tragkraft.

In einer besonders bevorzugten Ausführung sind am Lagergehäuse nach außen weisende Kühlrippen ausgebildet, durch die die Wärmeabgabe an die Umgebung durch die vergrößerte Fläche zusätzlich verstärkt wird, so dass eine Wärmeübertragung in Richtung des Elektromotors deutlich reduziert wird.

Auch ist es vorteilhaft, wenn zwischen dem Elektromotor und dem Strömungsgehäuse ein Wärmeableitblech angeordnet ist. Dies verhindert ein Aufheizen des den Elektromotor umgebenden Gehäuses durch Wärmestrahlung des Strömungsgehäuses.

In einer weiteren vorteilhaften Ausgestaltung der Erfindung ist auf der Welle eine Anlaufscheibe befestigt, welche mittels einer Druckfeder gegen das erste Lager oder die Lagerbuchse belastet ist. Die Anlaufscheibe ist fest auf der Welle befestigt und sorgt mit der Feder für eine axiale Positionsfestlegung der Welle und damit der Klappe im Kanal. Durch den Kontakt zur Lagerbuchse oder dem Gleitlager wird zusätzlich der Wärmekontakt zu diesen Bauteilen erhöht, wodurch wiederum eine erhöhte Wärmeabfuhr sowie eine Vorabdichtung in Richtung des zweiten Lagers erreicht werden.

Es wird somit eine Abgasklappenvorrichtung für eine Verbrennungskraftmaschine geschaffen, die im Heißgasbereich eingesetzt werden kann, ohne dass eine Trennung der Aktorwelle von der Klappenwelle erforderlich ist beziehungsweise der Aktor in großer Entfernung zum Strömungsgehäuse angeordnet werden muss. Hierzu wird einerseits der Wärmeeintrag in das Aktorgehäuse möglichst gering gehalten und so die Funktion auch bei kritischen Temperaturen sichergestellt.

Zwei Ausführungsbeispiele erfindungsgemäßer Abgasklappenvorrichtungen sind in den Figuren dargestellt und werden nachfolgend beschrieben.
Figur 1 zeigt eine Seitenansicht einer ersten Ausführung einer erfindungsgemäßen Klappenvorrichtung in geschnittener Darstellung.
Figur 2 zeigt eine im Vergleich zum ersten Ausführungsbeispiel um 90° gedrehte Darstellung einer zweiten Ausführung einer erfindungsgemäßen Abgasklappenvorrichtung in geschnittener Darstellung.

Die erfindungsgemäßen Abgasklappenvorrichtungen weisen ein Strömungsgehäuse 10 auf, welches einen Abgaskanal 12 begrenzt. Im Abgaskanal 12 ist ein Klappenkörper 14 angeordnet, über den der Durchströmungsquerschnitt des Abgaskanals 12 geregelt werden kann, indem der Klappenkörper 14 im Abgaskanal 12 gedreht wird.

Hierzu ist der Klappenkörper 14 auf einer Welle 16 befestigt, die durch das Strömungsgehäuse 10 in den Abgaskanal 12 ragt. Am zum Klappenkörper 14 gegenüberliegenden Ende ist auf der Welle 16 ein Abtriebszahnrad 18 befestigt, welches Teil eines als Stirnradgetriebe ausgebildeten Getriebes 20 ist. Dieses Getriebe 20 wird über einen Elektromotor 22 bei entsprechender Bestromung des Elektromotors 22 angetrieben, Hierzu ist auf einer Ausgangswelle 24 des Elektromotors 22 ein Antriebsritzel 26 befestigt, welches als Antriebsglied des Getriebes 20 wirkt, so dass die Drehbewegung des Elektromotors 22 untersetzt über das Getriebe 20 auf die Welle 16 und damit auf den Klappenkörper 14 übertragen wird.

Der Elektromotor 22 und das Getriebe 20 dienen somit als Aktor 28 der Abgasklappenvorrichtung und sind in einem gemeinsamen Aktorgehäuse 30 angeordnet, welches aus einem Hauptgehäuseteil 32, in dem der Elektromotor 22 sowie das Getriebe 20 montiert sind und einem einen Aktorinnenraum 34 verschließenden Deckel 36 besteht, der unter Zwischenlage einer Dichtung 38 am Hauptgehäuseteil 32 befestigt ist. Um den verwendeten Bauraum möglichst gering zu halten und den Elektromotor sowie das Getriebe 20 im Hauptgehäuseteil 32 einfach montieren zu können, ragt der parallel zur Welle 16 angeordnete Elektromotor 22 in Richtung des Strömungsgehäuses 10.

Um ein Eindringen von Abgas in das Aktorgehäuse 30 zu verhindern und eine einfache Drehbarkeit und Positionierung der Welle 16 beziehungsweise des Klappenkörpers 14 im Abgaskanal 12 sicher zu stellen, muss die Welle 16 zuverlässig axial und radial gelagert sowie abgedichtet werden. Aufgrund der Verwendung der Abgasklappenvorrichtung im heißen Abgasbereich muss zusätzlich der Elektromotor 22 vor zu hoher thermischer Belastung geschützt werden.

Hierzu ist am Strömungsgehäuse 10 eine hohlzylinderförmige Lageraufnahme 40 ausgebildet, die sich in Richtung eines ringförmigen Vorsprungs 42 am Aktorgehäuse 30 erstreckt. An den Vorsprung 42 schließt sich in den Aktorinnenraum 34 ragend ein ringförmiger Vorsprung 44 verkleinerten Durchmessers an, so dass zwischen den beiden sich entgegengesetzt erstreckenden Vorsprüngen 42, 44 ein Absatz 46 ausgebildet ist. Die Wände 45 der beiden Vorsprünge 42, 44 begrenzen radial eine Aufnahmeöffnung 48, in die im Bereich des nach außen weisenden Vorsprungs 42 die Lageraufnahme 40 des Strömungsgehäuses 10 ragt, deren axiales Ende unter Zwischenlage einer Axialdichtung 50 gegen den Absatz 46 anliegt. Der Außendurchmesser der Lageraufnahme 40 entspricht im Wesentlichen dem Innendurchmesser der Wände 45 des Vorsprungs 42, so dass die Wand 47 der Lageraufnahme 40 und die Wände 45 des Vorsprungs 42 radial vollflächig gegeneinander anliegen.

In der Lageraufnahme 40 des Strömungsgehäuses 10 ist für die Welle 16 ein als Gleitlager ausgeführtes erstes Lager 52 angeordnet, welches aus Kohle-Graphit hergestellt ist und axial gegen einen Absatz 46 des den Abgaskanal 12 begrenzenden Strömungsgehäuses 10 anliegt. Die Welle 16 erstreckt sich durch das erste Lager 52 und über den in den Aktorinnenraum 34 ragenden Vorsprung 44 hinaus durch die Aufnahmeöffnung 48. Die Aufnahmeöffnung 48 weist im Bereich des in den Aktorinnenraum 34 weisenden Vorsprungs 44 eine Querschnittsverengung auf, so dass an deren entgegengesetzten Enden jeweils ein Absatz 54, 56 gebildet wird.

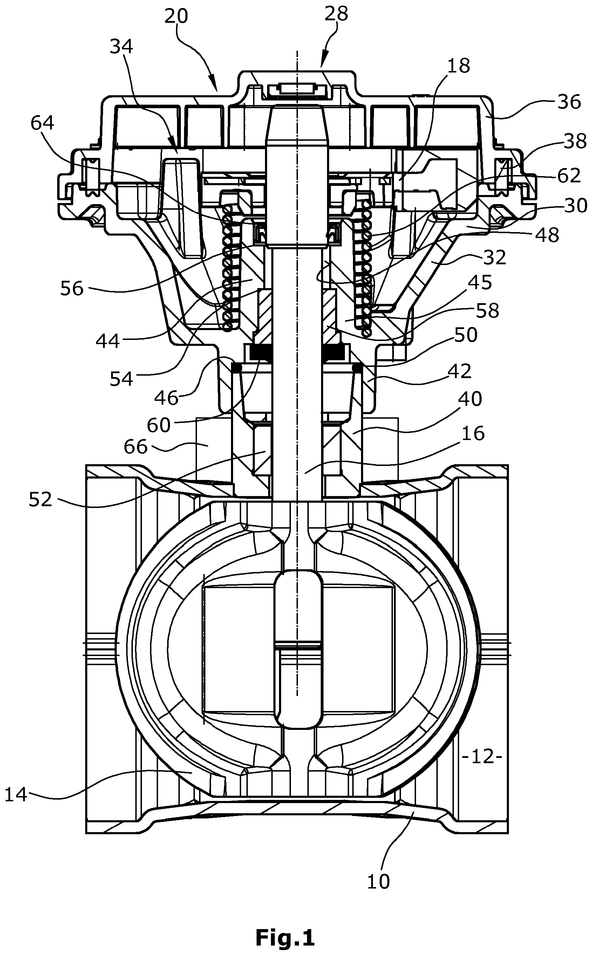

Bei der in der Figur 1 dargestellten Ausführung der Abgasklappenvorrichtung ist radial innerhalb dieses verengten Querschnitts ein zweites Lager 58 angeordnet, welches als Kohle-Graphit-Gleitlager ausgeführt ist, so dass die Welle zweifach gelagert ist. Das zum Klappenkörper 14 weisende axiale Ende dieses Lagers 58 ragt geringfügig über den Absatz 54 hinaus. Auf diese Weise wird es möglich, dass eine fest auf der Welle 16 angeordnete Anlaufscheibe 60 über eine Dreh- und Druckfeder 62 zur axialen Lagefixierung der Welle 16 gegen das zweite Lager 58 gedrückt wird. Ein Abgasfluss aus dem Abgaskanal 12 in Richtung des zweiten Lagers 58 wird hierdurch deutlich reduziert.

Diese Dreh-Druckfeder 62 ist im Aktorinnenraum 34, den Vorsprung 44 radial umgebend angeordnet und drückt gegen das fest auf der Welle 16 angeordnete Abtriebszahnrad 18, so dass mit diesem auch die Welle 16 in dieser axialen Richtung belastet wird. Des Weiteren greifen die beiden Endschenkel der Feder 62 in bekannter Weise derart hinter in den Figuren nicht erkennbare Vorsprünge am Aktorgehäuse 30 und am Abtriebszahnrad 18, dass die Welle 16 in eine Richtung zumindest bei Drehung aus der Ruhestellung vorgespannt ist. Entsprechend wird die Welle 16 aufgrund der Federkraft bei Ausfall des Elektromotors 22 in eine Notlaufposition gedreht.

Am in den Aktorinnenraum weisenden Ende der Aufnahmeöffnung 48 des Vorsprungs 44 ist die Welle 16 umgebend ein Dichtring 64 angeordnet, der axial gegen den Absatz 56 anliegt und die Aufnahmeöffnung 48 in Richtung des Aktorinnenraums 34 abdichtet,

Um sicher zu stellen, dass eine Überhitzung des Aktors 28 vermieden wird, wird die Welle 16 aus einem austenitischen Stahl hergestellt. Dieser weist eine Wärmeleitfähigkeit λ von etwa 15 W/mK auf. Hierdurch wird die Wärmeleitung vom Abgaskanal über die Welle 16 deutlich reduziert. Die dennoch über die Welle 16 in Richtung des Aktorinnenraums 34 geleitete Wärme wird zunächst am ersten Lager 52 abgeführt, da dieses mit einer Wärmeleitfähigkeit λ von etwa 65 W/mK eine höhere Wärmeleitfähigkeit aufweist als die Welle 16 und somit als erste Wärmesenke dient. Da das Lager 52 auch einen radial vollflächigen Kontakt mit einer großen Kontaktfläche zur Lageraufnahme 40 aufweist, welche ebenfalls eine bessere Wärmeleitfähigkeit aufweist, erfolgt eine weitere Wärmeleitung nach außen. Um die mögliche an dieser Position abzuführende Wärmemenge zusätzlich zu erhöhen, sind am Strömungsgehäuse 10 im Bereich der Lageraufnahme 40 nach außen weisende Kühlrippen 66 ausgebildet, durch die die wärmeabgebende Oberfläche vergrößert wird.

Eine weitere Wärmeabfuhr wird dadurch erreicht, dass die Lageraufnahme 40 vollflächig am Vorsprung 42 anliegt, da dieser ebenso wie das übrige Aktorgehäuse 30 aus Aluminiumdruckguss hergestellt ist, welches eine hohe Wärmeleitfähigkeit λ von etwa 120 bis 150 W/mK, so dass über dieses Gehäuse große Wärmemengen abgeführt werden können.

Entsprechend dient auch das zweite Lager 58 durch seine radial beinahe vollflächige Anlage an der Welle 16 und am Vorsprung 44 des Aktorgehäuses 30 als zusätzliche Wärmesenke, durch welche sowohl die direkt durch die Welle 16 geleitete Wärme als auch die Wärme des an der Welle 16 entlang strömenden Abgases über die Oberfläche des gut wärmeleitenden Aktorgehäuses 30 abgeführt werden kann.

Als weitere Maßnahme wird ein Wärmeeintrag in den Aktorinnenraum 34 durch entlang der Welle 16 strömendes Abgas durch den Dichtring 64 verhindert. Zusätzlich ist am Strömungsgehäuse 10 zwischen dem Strömungsgehäuse 10 und dem den Elektromotor 22 aufnehmenden Abschnitt des Aktorgehäuses 30 ein Wärmeableitblech 68 angeordnet, über welches eine auf den Elektromotor 22 wirkende Wärmestrahlung durch den Abgaskanal 12 vermieden wird.

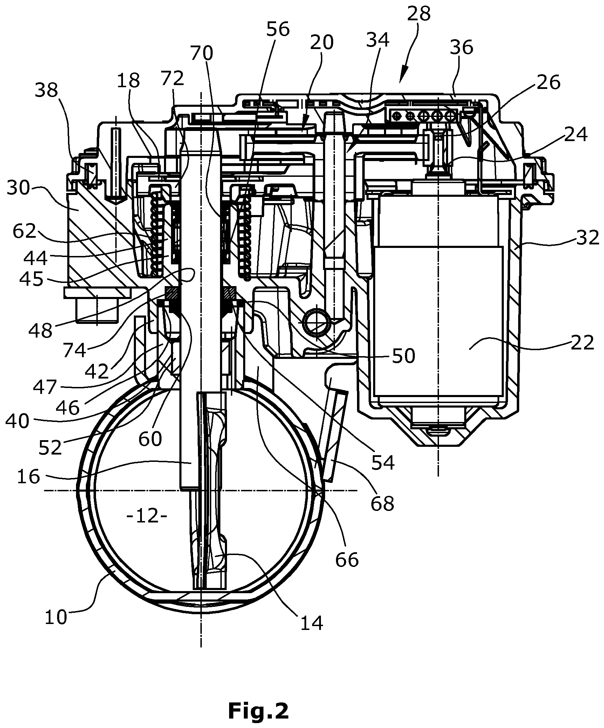

Das Ausführungsbeispiel gemäß der Figur 2 unterscheidet sich von dem vorbeschriebenen durch eine geänderte Ausführung der Lagerung und Abdichtung. Anstelle der Verwendung des zweiten Gleitlagers 58 und des Dichtrings 64 erfolgt die Abdichtung und Lagerung durch eine Kombination eines Radiallagers in Form eines Nadellagers 70 mit integrierten Dichtringen 72 sowie einem Axiallager in Form einer Lagerbuchse 74.

Das Nadellager 70 liegt am zum Aktorinnenraum 34 weisenden Absatz 56 des Vorsprungs 44 an, dient als zweites Lager 58 zur Lagerung der Welle 16 und dichtet über die integrierten Dichtringe 72 die Aufnahmeöffnung 48 in Richtung des Aktorinnenraums 34 ab, so dass lediglich eine geringe Wärmemenge durch das Abgas in den Aktorinnenraum 34 eindringen kann.

Die Lagerbuchse 74 liegt gegen den zum Strömungsgehäuse 10 weisenden Absatz 54 im Bereich des Vorsprungs 44 an und lagert die Welle 16 axial. Die Lagerbuchse 74 ragt wie im ersten Ausführungsbeispiel das Gleitlager 58 über den Absatz 46 hinaus, so dass die Anlaufscheibe 60 durch die Feder 62 gegen die Lagerbuchse 74 belastet wird und auf der Lagerbuchse 74 dreht, welche radial gegen die Wand der Aufnahmeöffnung 48 flächig anliegt und somit die Funktion als zweite Wärmesenke erfüllt. Die Gleitbuchse weist hierzu neben dem vollflächigen Kontakt zum gut Wärme leitenden Aktorgehäuse 30 eine Wärmeleitfähigkeit auf, die ebenfalls zumindest größer ist als die Wärmeleitfähigkeit der Welle 16. Entsprechend wird auch hier ein großer Teil der durch die Welle 16 geleiteten Wärme über die axiale und die radiale Anlange an den Wänden der Aufnahmeöffnung nach außen an die Umgebung abgeführt.

Es wird somit eine Klappenvorrichtung geschaffen, bei der einerseits eine sehr gute Wärmeableitung nach außen an die Umgebung besteht und andererseits ein Eindringen der Wärme in den Aktorinnenraum entlang der einteiligen Welle so weit reduziert wird, dass die Verwendung einer derartigen Abgasklappenvorrichtung im heißen Abgasbereich ermöglicht wird, indem Wärmesenken und Wärmebrücken erzeugt werden.

## Patentansprüche

1. Abgasklappenvorrichtung für eine Verbrennungskraftmaschine mit einem Strömungsgehäuse (10), das einen Abgaskanal (12) begrenzt, einem Klappenkörper (14), der drehbar im Abgaskanal (12) angeordnet ist,
einer Welle (16), auf der der Klappenkörper (14) befestigt ist,
einem elektrischen Aktor (28), der einen Elektromotor (22) und ein Getriebe (20) aufweist, über welche die Welle (16) und der Klappenkörper (14) im Abgaskanal (12) drehbar sind,
einem separaten Aktorgehäuse (30), in dem der Aktor (28) angeordnet ist,
wobei die Welle (16) in das Aktorgehäuse (30) ragt,
**dadurch gekennzeichnet, dass**
auf der Welle (16), auf der der Klappenkörper (14) angeordnet ist, ein Abtriebszahnrad (18) des Getriebes (20) befestigt ist und die Welle (16) eine Wärmeleitfähigkeit von λ<17W/mK aufweist und in einem Lager (52) angeordnet ist, welches eine Wärmeleitfähigkeit von λ>17W/mK aufweist und in einer Lageraufnahme (40) des Strömungsgehäuses (10) angeordnet ist, wobei der Innenumfang der Lageraufnahme (40) dem Außenumfang des Lagers (52) entspricht und die Lageraufnahme (40) des Strömungsgehäuses (10) in eine Aufnahmeöffnung (48) des Aktorgehäuses (30) ragt und radial gegen die Aufnahmeöffnung (48) radial begrenzende Wände (45) anliegt.

2. Abgasklappenvorrichtung für eine Verbrennungskraftmaschine nach Anspruch 1,
**dadurch gekennzeichnet, dass**
das Aktorgehäuse (30) eine Wärmeleitfähigkeit von λ>150W/mK aufweist.

3. Abgasklappenvorrichtung für eine Verbrennungskraftmaschine nach Anspruch 2,
**dadurch gekennzeichnet, dass**
das Aktorgehäuse (30) aus einer Aluminiumlegierung hergestellt ist.

4. Abgasklappenvorrichtung für eine Verbrennungskraftmaschine nach einem der vorhergehenden Ansprüche,
**dadurch gekennzeichnet, dass**
die Welle (16) aus einem austenitischen Stahl hergestellt ist.

5. Abgasklappenvorrichtung für eine Verbrennungskraftmaschine nach einem der vorhergehenden Ansprüche,
**dadurch gekennzeichnet, dass**
das Lager (52) ein Kohlegraphitlager ist.

6. Abgasklappenvorrichtung für eine Verbrennungskraftmaschine nach einem der vorhergehenden Ansprüche,
**dadurch gekennzeichnet, dass**
in der Aufnahmeöffnung (48) des Aktorgehäuses (30) ein zweites Gleitlager (58) mit einer Wärmeleitfähigkeit von λ>17W/mK angeordnet ist, in dem die Welle (16) gelagert ist, wobei der Außenumfang des zweiten Lagers (58) am Aktorgehäuse (30) anliegt.

7. Abgasklappenvorrichtung für eine Verbrennungskraftmaschine nach einem der vorhergehenden Ansprüche,
**dadurch gekennzeichnet, dass**
in der Aufnahmeöffnung (48) axial an der vom Klappenkörper (14) weg weisenden Seite des zweiten Lagers (58) ein Dichtring (64) angeordnet ist, der die Welle (16) umgibt.

8. Abgasklappenvorrichtung für eine Verbrennungskraftmaschine nach einem der Ansprüche 1 bis 5,
**dadurch gekennzeichnet, dass**
in der Aufnahmeöffnung (48) des Aktorgehäuses (30) eine 5 Lagerbuchse (74) als Axiallager mit einer Wärmeleitfähigkeit von λ>17W/mK angeordnet ist, welches die Welle (16) umgibt, wobei der Außenumfang der Lagerbuchse (74) am Aktorgehäuse (30) anliegt.

9. Abgasklappenvorrichtung für eine Verbrennungskraftmaschine nach Anspruch 8,
**dadurch gekennzeichnet, dass**
in der Aufnahmeöffnung (48) ein als Nadellager (70) mit Radialdichtringen (72) ausgeführtes Radiallager angeordnet ist, welches die Welle (16) umschließt, wobei die Lagerbuchse (74) axial zwischen dem Klappenkörper (14) und dem Nadellager (70) angeordnet ist.

10. Abgasklappenvorrichtung für eine Verbrennungskraftmaschine nach einem der vorhergehenden Ansprüche,
**dadurch gekennzeichnet, dass**
am Strömungsgehäuse (10) im Bereich der Lageraufnahme (40) nach außen weisende Kühlrippen (66) ausgebildet sind.

11. Abgasklappenvorrichtung für eine Verbrennungskraftmaschine nach einem der vorhergehenden Ansprüche,
**dadurch gekennzeichnet, dass**
zwischen dem Elektromotor (22) und dem Strömungsgehäuse (10) ein Wärmeableitblech (68) angeordnet ist.

12. Abgasklappenvorrichtung für eine Verbrennungskraftmaschine nach einem der vorhergehenden Ansprüche,
**dadurch gekennzeichnet, dass**
auf der Welle (16) eine Anlaufscheibe (60) befestigt ist, welche mittels einer Druckfeder (62) gegen das zweite Gleitlager (58) oder die Lagerbuchse (74) belastet ist.

## Claims

1. Exhaust gas flap device for an internal combustion engine comprising a flow housing (10) which forms an exhaust gas channel (12) a flap body (14) which is rotatably arranged in the exhaust gas channel (12)
a shaft (16) on which the flap body (14) is fixed
an electric actuator (28) comprising an electric motor (22) and a gear unit (20), via which the shaft (16) and the flap body (14) are rotatable in the exhaust gas channel (12),
a separate actuator housing (30) in which the actuator (28) is arranged,
wherein the shaft (16) extends into the actuator housing (30), **characterized in that**
an output gear (18) of the gear unit (20) is fixed on the shaft (16) on which the flap body (14) is arranged, and the shaft (16) comprises a thermal conductivity of <17W/mK and is arranged in a bearing (52) which comprises a thermal conductivity of >17W/mK and is arranged in a bearing receptacle (40) of the flow housing (10) wherein the inner circumference of the bearing receptacle (40) corresponds to the outer circumference of the bearing (52) and the bearing receptacle (40) of the flow housing (10) projects into a receiving opening (48) of the actuator housing (30) and bears radially against walls (45) radially delimiting the receiving opening (48).

2. Exhaust gas flap device for an internal combustion engine according to claim 1,
**characterized in that**
the actuator housing (30) comprises a thermal conductivity of >150W/mK.

3. Exhaust gas flap device for an internal combustion engine according to claim 2,
**characterized in that**
the actuator housing (30) is made of an aluminum alloy.

4. Exhaust gas flap device for an internal combustion engine according to one of the preceding claims,
**characterized in that**
the shaft (16) is made of an austenitic steel.

5. Exhaust gas flap device for an internal combustion engine according to one of the preceding claims,
**characterized in that**
the bearing (52) is a carbon graphite bearing.

6. Exhaust gas flap device for an internal combustion engine according to one of the preceding claims,
**characterized in that**
a second sliding bearing (58) with a thermal conductivity of >17W/mK is arranged in the receiving opening (48) of the actuator housing (30), in which second bearing (58) the shaft (16) is supported, the outer circumference of the second bearing (58) abuts against the actuator housing (30).

7. Exhaust gas flap device for an internal combustion engine according to one of the preceding claims,
**characterized in that**
a sealing ring (64) is arranged in the receiving opening (48) on the side of the second bearing (58) axially facing away from the flap body (14) and surrounds the shaft (16).

8. Exhaust gas flap device for an internal combustion engine according to any one of claims 1 to 5,
**characterized in that**
a bearing bush (74) is arranged in the receiving opening (48) of the actuator housing (30) as an axial bearing with a thermal conductivity of >17W/mK, which surrounds the shaft (16), the outer circumference of the bearing bush (74) abuts against the actuator housing (30).

9. Exhaust gas flap device for an internal combustion engine according to claim 8,
**characterized in that**
a radial bearing designed as a needle bearing (70) with radial sealing rings (72) is arranged in the receiving opening (48) and surrounds the shaft (16), the bearing bush (74) being arranged axially between the flap body (14) and the needle bearing (70).

10. Exhaust gas flap device for an internal combustion engine according to one of the preceding claims,
**characterized in that**
outwardly directed cooling fins (66) are configured on the flow housing (10) in the region of the bearing receptacle (40).

11. Exhaust gas flap device for an internal combustion engine according to one of the preceding claims,
**characterized in that**
a heat dissipation plate (68) is arranged between the electric motor (22) and the flow housing (10).

12. Exhaust gas flap device for an internal combustion engine according to one of the preceding claims,
**characterized in that**
a thrust washer (60) is attached to the shaft (16), which is loaded against the second sliding bearing (58) or the bearing bushing (74) by means of a compression spring (62).

## Revendications

1. Appareil de clapet de gaz d'échappement pour un moteur à combustion interne, qui comprend
un boîtier d'écoulement (10) qui forme un canal de gaz d'échappement (12),
un corps de clapet (14) qui est disposé de manière rotative dans le canal de gaz d'échappement (12),
un arbre (16) sur lequel le corps de clapet (14) est fixé,
un actuateur électrique (28) qui comprend un moteur électrique (22) et une unité d'engrenage (20), par l'intermédiaire desquels l'arbre (16) et le corps du clapet (14) peuvent tourner dans le canal des gaz d'échappement (12),
un boîtier d'actionneur séparé (30) dans lequel l'actionneur (28) est disposé,
dans lequel l'arbre (16) s'étend dans le boîtier de l'actionneur (30), **caractérisé en ce que**
un engrenage de sortie (18) de l'unité d'engrenage (20) est fixé sur l'arbre (16) sur lequel est disposé le corps de clapet (14), et l'arbre (16) comprend une conductivité thermique de <17W/mK et est disposé dans un palier (52) qui comprend une conductivité thermique de >17W/mK et est disposé dans un réceptacle de palier (40) du boîtier d'écoulement (10), la circonférence intérieure du réceptacle de palier (40) correspondant à la circonférence extérieure du palier (52), et le réceptacle de palier (40) du boîtier d'écoulement (10) projette dans une ouverture de réception (48) du boîtier d'actionneur (30) et repose radialement contre des parois (45) délimitant radialement l'ouverture de réception (48).

2. Appareil à clapet de gaz d'échappement pour un moteur à combustion interne selon la revendication 1,
**caractérisé en ce que**
le boîtier de l'actionneur (30) a une conductivité thermique supérieure à 150W/mK.

3. Appareil de clapet de gaz d'échappement pour un moteur à combustion interne selon la revendication 2,
**caractérisé en ce que**
le boîtier de l'actionneur (30) est réalisé en alliage d'aluminium.

4. Appareil de clapet de gaz d'échappement pour un moteur à combustion interne selon l'une des revendications précédentes, **caractérisé en ce que**
l'arbre (16) est réalisé en acier austénitique.

5. Appareil de clapet de gaz d'échappement pour un moteur à combustion interne selon l'une des revendications précédentes, **caractérisé en ce que**
le palier (52) est un palier en carbone graphite.

6. Appareil de clapet de gaz d'échappement pour moteur à combustion interne selon l'une des revendications précédentes,
**caractérisé en ce que**
dans l'ouverture de réception (48) du boîtier d'actionneur (30) est disposé un deuxième palier lisse (58) ayant une conductivité thermique >17W/mK, dans lequel deuxième palier (58) l'arbre (16) est supporté, la circonférence extérieure du deuxième palier (58) est en butée contre le boîtier d'actionneur (30).

7. Appareil de clapet de gaz d'échappement pour un moteur à combustion interne selon l'une des revendications précédentes, **caractérisé en ce que**
une bague d'étanchéité (64) est disposée dans l'ouverture de réception (48) du côté du deuxième palier (58) axialement opposé au corps de clapet (14) et entouree l'arbre (16).

8. Appareil de clapet de gaz d'échappement pour un moteur à combustion interne selon l'une quelconque des revendications 1 à 5, **caractérisé en ce que**
un coussinet (74) est disposé dans l'ouverture de réception (48) du boîtier d'actionneur (30) en la forme d'un palier axial avec une conductivité thermique >17W/mK, qui entoure l'arbre (16), la circonférence extérieure du coussinet (74) s'appuie sur le boîtier d'actionneur (30).

9. Appareil de clapet de gaz d'échappement pour un moteur à combustion interne selon la revendication 8,
**caractérisé en ce que**
un palier radial réalisé sous la forme d'un roulement à aiguilles (70) avec des bagues d'étanchéité radiales (72) est disposé dans l'ouverture de réception (48) et entoure l'arbre (16), le coussinet (74) est disposé axialement entre le corps de clapet (14) et le roulement à aiguilles (70).

10. Appareil de clapet de gaz d'échappement pour un moteur à combustion interne selon l'une des revendications précédentes, **caractérisé en ce que**
des ailettes de refroidissement (66) orientées vers l'extérieur sont configurées sur le boîtier d'écoulement (10) dans la zone du réceptacle de palier (40).

11. Appareil de clapet de gaz d'échappement pour un moteur à combustion interne selon l'une des revendications précédentes, **caractérisé en ce que**
une feuille de dissipation de chaleur (68) est disposée entre le moteur électrique (22) et le boîtier d'écoulement (10).

12. Appareil de clapet de gaz d'échappement pour un moteur à combustion interne selon l'une des revendications précédentes, **caractérisé en ce que**
une rondelle de butée (60) est fixée sur l'arbre (16), qui est sollicitée contre le deuxième palier lisse (58) ou le coussinet (74) par le moyen d'un ressort de compression (62).
